# EUROPEAN PATENT SPECIFICATION

(11) **EP 0 301 875 B1**
(45) Date of publication and mention of the grant of the patent: **02.02.1994**
(21) Application number: 88306990.8
(22) Date of filing: 29.07.1988
(51) Int. Cl.: C08L 23/02, C08K 5/13, C08K 5/52

(54) **Polyolefin composition**
Polyolefin-Zusammensetzung
Composition de polyoléfine

(30) Priority: 30.07.1987 JP 191333/87
(43) Date of publication of application: 01.02.1989
(73) Proprietor: ASAHI DENKA KOGYO KABUSHIKI KAISHA, Arakawa-ku Tokyo (JP)
(72) Inventor: Yagi, Masaki, Ohmiya-shi Saitama (JP); Haruna, Tohru, Okegawa-shi Saitama (JP); Takeuchi, Takashi, Urawa-shi Saitama (JP); Yukino, Toshinori, Urawa-shi Saitama (JP)
(74) Representative: Taylor, Phillip Kenneth

(56) References cited:
- EP-A- 0 038 876
- EP-A- 0 168 721
- EP-A- 0 186 628
- EP-A- 0 255 097
- FR-A- 2 410 017

## Description

The present invention relates to a polyolefine composition improved in thermostability (antioxidation), light resistance and hue. The invention relates more particularly to a polyolefine composition improved in thermostability, light resistance and hue, comprising a specific phenol compound and a specific organic phosphite compound added to a polyolefine which is obtained using a Ziegler catalyst and contains a catalyst residue.

Heretofore, it has been known that a composition excellent in thermostability and low in discoloration caused by light, etc. can be obtained by the combined addition of a certain phenol-based antioxidant and a certain organic phosphite to a polyolefine.

EP-A- 0 038 876 describes 2,6-Di-tertiary butyl phenyl pentaerythritol spiro bis-phosphites having the structure: 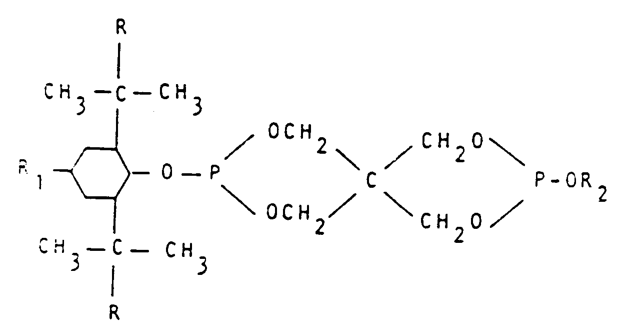
wherein:
R is alkyl having from one to six carbon atoms;
R₁ is methyl or ethyl;
R₂ is selected from the group consisting of alkyl having from one up to about eighteen carbon atoms; cycloalkyl having from three up to about twelve carbon atoms; and alkaryl and aryl having from six to about thirty carbon atoms; such groups substituted with from one to about four oxy ether-O- and/or carboxylic ester-COO-groups; the residue of a polyhydric alcohol having from two to about eighteen carbon atoms, and from two to about ten hydroxyl groups; and the residue of a polyphenol having from six to about eighteen carbon atoms and from two to about ten phenolic hydroxyl groups.

Stabilizer compositions are provided comprising a phenolic antioxidant and such phosphites as well as synthetic resin compositions having an enhanced resistance to deterioration by heat and/or light due to the presence of such a phosphite and/or stabilizer composition.

Such a composition, however, suffered from the disadvantage that compared with a polyolefine without the addition of the aforesaid phenol-based antioxidant and organic phosphite, it has a lower brightness, that is, there is a deterioration of the hue. It is thought that the deterioration of the hue is caused by the fixation of hue peculiar to the organic phosphite in the polyolefine and the interaction between the remaining catalyst in the polyolefine and the phenol-based antioxidant.

In fact an especially remarkable deterioration of the hue occurred in polyolefines wherein the catalyst residue was not removed after the polymerization reaction.

To prevent such a deterioration of the hue, a method wherein the catalyst residue is decreased by the purification of the polyolefine after the polymerization reaction, and a method wherein the bad influence of the catalyst residue is prevented by the addition of a metal deactivator, have been employed independently or in combination. The conventional purification intended for the reduction of the catalyst residue in the polyolefine requires complicated procedures and processes and costs a great deal. In recent years, however, catalysts having high activities have been developed, with the consequence that the content of the remaining transition metal components in the polyolefine can be held down to a relatively low level, and the bad influence of the remaining catalyst has, to a certain extent, come to be reduced. Accordingly, attempts have been made to reduce costs by simplifying the purification or simply performing no purification. Even when the catalysts having high activities are used, however, the bad influence of the remaining catalyst has not been capable of being remedied to such an extent that the bad influence can be neglected.

The omission of the catalyst removing step in the polyolefine manufacturing process would be very advantageous. Accordingly, an improvement in hue in polyolefine products from which residual catalyst has not been removed is highly desirable.

It is therefore an object of the present invention to provide a polyolefine composition excellent in thermostability, low in discolouration caused by light, and excellent in hue. It has now been found that the above-described object can be accomplished, even in a polyolefine containing a catalyst residue, by the addition of a specific phenol compound and a specific organic phosphite compound to the polyolefine.

EP-A- 0 255 097 (cited as relevant under Article 54 (3) and (4) EPC) describes a process for improving resistance to deterioration when exposed to sterilizing radiation of polyolefin resins which comprises combining with polyolefin resin an amount sufficient to improve resistance of the polyolefin resin to such deterioration of a phosphite having the formula: 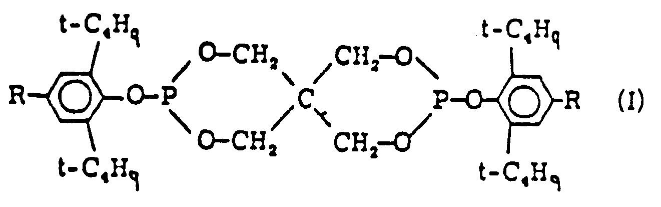
wherein R is alkyl having from one to about nine carbon atoms; and then exposing the polyolefin resin to sterilizing radiation. The phosphites can be combined with conventional polyolefin resin heat stabilizers, including phenolic antioxidants. The phenolic antioxidant contains one or more phenolic hydroxyl groups, and one or more phenolic nuclei, and can contain from about eight to about three hundred carbon atoms. In addition, the phenolic nucleus can contain an oxy or thio ether group.

According to the present invention there is provided a polyolefine composition having improved thermostability, light resistance and hue, the polyolefine content of which has been produced with the use of a Ziegler catalyst and contains at least 30 ppm of metals coming from the Ziegler catalyst used and which comprises for each 100 parts by weight of polyolefine 0.005 to 1 part by weight of a phenol compound of the general formula 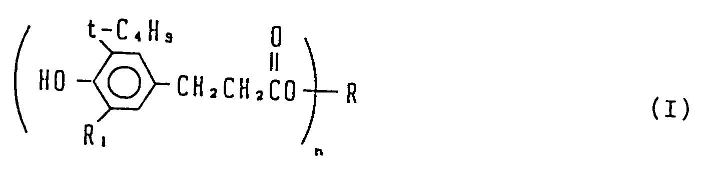
wherein R is a monohydric, dihydric, trihydric or tetrahydric alcohol residue, R₁ is a methyl group or a t-butyl group and n is an integer of 1 to 4, and 0.005 to 1 part by weight of an organic phosphite compound of the general formula 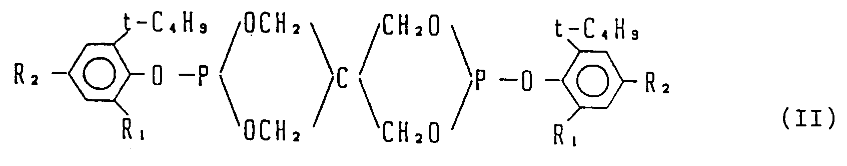
wherein R₁ is a methyl group or a t-butyl group and R₂ is an alkyl group, -CH₂CH₂COOR₃ or -COOR₃ in which R₃ is an alkyl group, an aryl group or an alkyl aryl group.

Preferably R is a pentaerythritol residue, R₂ is an alkyl group having 1 to 9 carbon atoms, R₃ is an alkyl group having 1 to 18 carbon atoms, phenyl or 2,4-di-tert.-butylphenyl.

Examples of polyolefines to which the invention is applicable are high density polyethylene, low density polyethylene, linear low density polyethylene, polypropylene, polybutylene, polybutadiene, cis-polybutadiene rubber, ethylene-propylene polymer, ethylene-propylenediene copolymer, and olefine homopolymers and copolymers such as ethylenepropylene-cyclopentadiene copolymer, ethylenepropylene-1,4-cyclooctadiene copolymer.

The stabilizer system of the invention is effective for polyolefines which contain catalyst residue and which have not been subjected to a catalyst removing step or to which the simplified catalyst removing step has been applied. The stabilizer system has an especially noticeable effect when it is applied to the crude or insufficiently-purified polyolefine containing a relatively high percentage of catalyst residue derived from metallic components in a catalyst, i.e. more than 30 ppm, especially more than 50 ppm, of metals such as titanium, aluminium, magnesium, etc. derived from the catalyst. For example, the stabilizer system has a noticeable effect when it is used in polyolefines to which no deliming treatment is applied, such as polypropylene produced using a highly active catalyst which has as a component a transition metal compound carried by magnesium halide. The polyolefine used in the invention may also be slightly purified or relatively highly purified.

Examples of the phenol compound of the general formula (I) include monoesters of monohydric alcohols such as methyl, hexyl, octyl, 2-ethyl hexyl, nonyl, decyl, dodecyl, tridecyl, tetradecyl, hexadecyl, octadecyl, eicocyl, dodecyl, tetracocyl and triacontyl alcohols of 3,5-di-t-butyl-4-hydroxyphenylpropionic acid or 3-t-butyl-4-hydroxy-5-methylphenylpropionic acid; diesters of dihydric alcohols such as ethylene glycol, triethylene glycol, propylene glycol, dipropylene glycol, neopentyl glycol, 1,6-hexanediol, thiodiethanol, 3,9-bis (1,1-dimethyl-2-hydroxyethyl)-2,4,8,10-tetraoxaspiro [5,5] undecane and hydrogenated bisphenol-A; triesters of trihydric alcohols such as glycerine, trimethylolpropane, trimethylolethane and tris (2-hydroxyethyl) isocyanurate; and tetraesters of tetrahydric alcohols such as pentaerythritol, ditrimethylolethane and ditrimethylolpropane.

The phenol compound is added in the ratio of 0.005 to 1 part by weight to 100 parts by weight of polyolefine.

Examples of the alkyl group expressed by R₂ in the general formula (II) include methyl, ethyl, isopropyl, t-butyl, t-amyl, octyl, isooctyl, t-octyl, nonyl, t-nonyl, etc.

Examples of the alkyl group expressed by R₃ include methyl, ethyl, isopropyl, butyl, hexyl, octyl, 2-ethyl hexyl, isooctyl, isodecyl, dodecyl, tetradecyl, hexadecyl, octadecyl, cyclohexyl, benzyl, etc. Examples of the alkyl aryl group include tolyl, xylyl, mesityl, ethyl phenyl, butyl phenyl, 2-t-butyl phenyl, 2,4-di-t-butyl phenyl, 2,4-di-t-amyl phenyl, 2,4-di-t-octyl phenyl, 2-t-butyl-4-methyl phenyl, 2-t-butyl-5-methyl phenyl, etc.

Specific examples of the organic phosphite compound of the general formula (II) include bis (2,6-di-t-butyl-4-methyl phenyl) pentaerythritoldiphosphite, bis (2,6-di-t-butyl-4-ethyl phenyl) pentaerythritoldiphosphite, bis (2,6-di-t-butyl-4-methoxycarbonyl phenyl) pentaerythritoldiphosphite, bis (2-t-butyl-4-methoxycarbonyl-6-methyl phenyl) pentaerythritoldiphosphite, bis (2,6-di-t-butyl-4-hexadecyl oxycarbonyl phenyl) pentaerythritoldiphosphite, bis [2,6-di-t-butyl-4-(2′,4′-di-t-butylphenoxycarbonyl) phenyl] pentaerythritoldiphosphite, bis [2,6-di-t-butyl-4-(2′,4′-di-t-amylphenoxycarbonyl) phenyl] pentaerythritoldiphosphite, bis (2,6-di-t-butyl-4-methoxycarbonyl ethyl phenyl) pentaerythritoldiphosphite, bis (2,6-di-t-butyl-4-stearyl oxycarbonyl ethyl phenyl) pentaerythritoldiphosphite, bis (2-t-butyl-4-methoxycarbonyl ethyl-6-methyl phenyl) pentaerythritoldiphosphite, bis (2-t-butyl-4-stearyl oxycarbonyl ethyl-6-methyl phenyl) pentaerythritoldiphosphite, etc.

The phosphite compound is added in the ratio of 0.001 to 10 parts by weight to 100 parts by weight of polyolefine.

The composition of the invention may also include a sulfur-based antioxidant to improve the oxidation stability. Examples of the sulfur-based antioxidant include esters (e.g. pentaerythritoltetralaurylthiopropionate) of polyhydric alcohols (e.g. glyceline, trimethylolethane, trimethylolpropane, pentaerythritol, trishydroxyethyl isocyanurate) of dialkylthiodipropionates such as dilauryl-, dimyristyl-, distearyl-, etc. and alkylthiopropionic acids such as butyl-, octyl-, lauryl-, stearyl-, etc.

The composition of the invention may also include a light stabilizer to improve the light resistance. Examples of the light stabilizer include hydroxybenzophenones such as 2-hydroxy-4-methoxybenzophenone, 2-hydroxy-4-n-octoxybenzophenone, 2,2′-di-hydroxy-4-methoxybenzophenone, 2,4-dihydroxybenzophenone, etc.; benzotriazoles such as 2-(2′-hydroxy-3′-t-butyl-5′-methyl phenyl)-5-chlorobenzotriazole, 2-(2′-hydroxy-3′,5′-di-t-butyl phenyl)-5-chlorobenzotriazole, 2-(2′-hydroxy-5′-methyl phenyl) benzotriazole, 2-(2′-hydroxy-3′,5′-di-t-amyl phenyl) benzotriazole, etc.; benzoates such as phenyl salicylate, p-t-butyl phenyl salicylate, 2,4-di-t-butyl phenyl-3,5-di-t-butyl-4-hydroxybenzoate, hexadecyl-3,5-di-t-butyl-4-hydroxybenzoate, etc.; nickel compounds such as 2,2′-thiobis (4-t-octyl phenol) Ni salt, [2,2′-thiobis (4-t-octyl phenolate)] -n-butylamine Ni, (3,5-di-t-butyl-4-hydroxybenzyl) phosphonic acid monoethyl ester Ni salt, etc.; piperidine compounds such as bis (2,2,6,6-tetramethyl-4-piperidyl) sebacate, bis (1,2,2,6,6-pentamethyl-4-piperidyl)-n-butyl-3,5-di-tertiary butyl-4-hydroxybenzyl-malonate, bis (1-acryloyl-2,2,6,6-tetramethyl-4-piperidyl) bis (3,5-di-tertiary butyl-4-hydroxybenzyl) malonate, tetraxis (2,2,6,6-tetramethyl-4-piperidyl) butane-1,2,3,4-tetracarboxylate, 1-hydroxyethyl-2,2,6,6-tetramethyl-4-piperidinol/diethyl succinate condensate, cyanur chloride/tertiary octylamine/1,6-bis (2,2,6,6-tetramethyl-4-piperidylamino) hexane condensate, etc.; substituted acrylonitriles such as methyl α-cyano-β-methyl-β-(p-methoxyphenyl) acrylate, etc.; and dianilide oxalates such as diamide N-2-ethyl phenyl-N′-2-ethoxy-5-tertiary butyl phenyl oxalate, diamide N-2-ethyl phenyl-N′-2-ethoxyphenyl oxalate, etc.

The composition of the invention may contain, if necessary, heavy metal deactivators, nucleus formers, metal soaps, organic tin compounds, plasticizers, epoxy compounds, pigments, fillers, blowing agents, antistatic agents, flame retarders, lubricants, processing aids, etc.

The present invention will be further illustrated by the following Examples which are purely illustrative and not to be regarded as limiting the invention.

### Example 1

The phenol compound and organic phosphite compound described in Table 1 were added each in an amount of 0.1 part by weight to 100 parts by weight of crude high density polyethylene (Ti: 4, Al: 51, Mg: 3, Si: 42 ppm) followed by thorough mixing. The resulting composition was pelletized using a conventional extruder at the resin temperature of 250°C and injection-moulded at 250°C to prepare test pieces of 1mm thickness.

Using test pieces, the thermostability, change of hue, and weather resistance were evaluated by the following methods.

The results are shown in Table 1.

### (Termostability and Change of Hue)

The test piece was placed in a gear oven at 150 °C, and the time required for the test piece to be deteriorated (thermostability) was measured. Further, the change of the hue (heat coloring property) of the test piece after 72-hours heating was measured using a Hunter colorimeter and expressed in terms of degree of yellowness.

### (Weather Resistance)

The test piece was placed in a weather meter and after 100-hours irradiation at 63 °C, the brightness of the test piece was measured using the Hunter colorimeter.

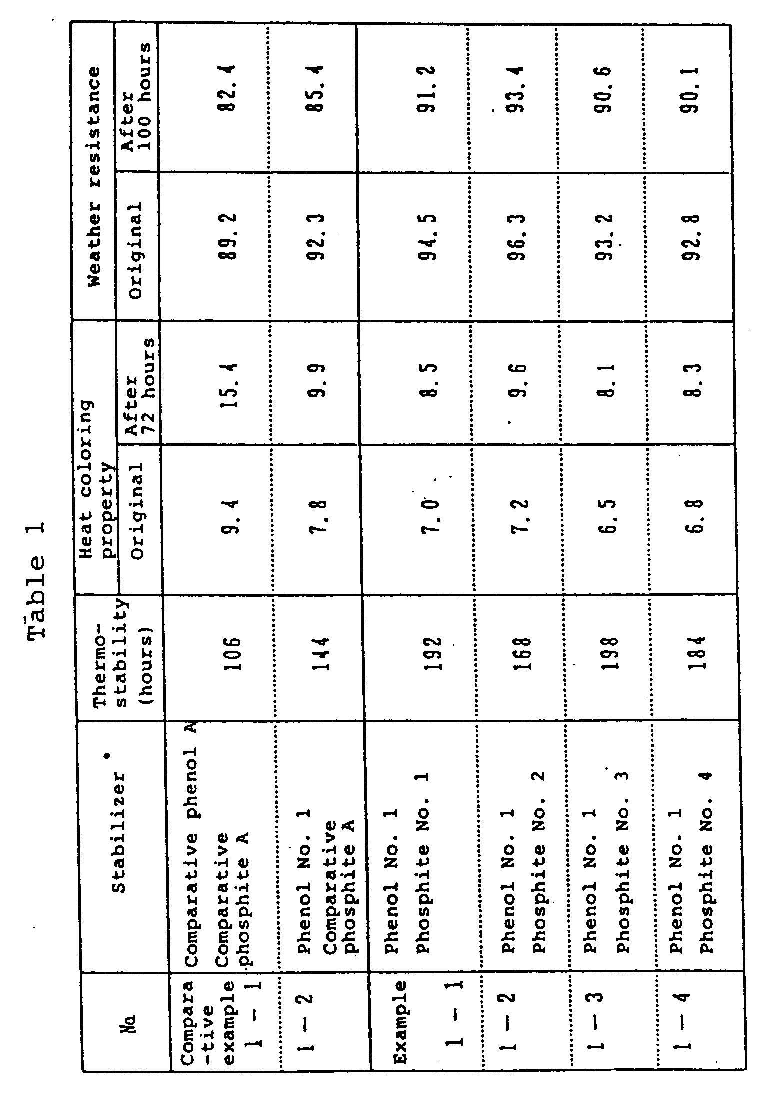

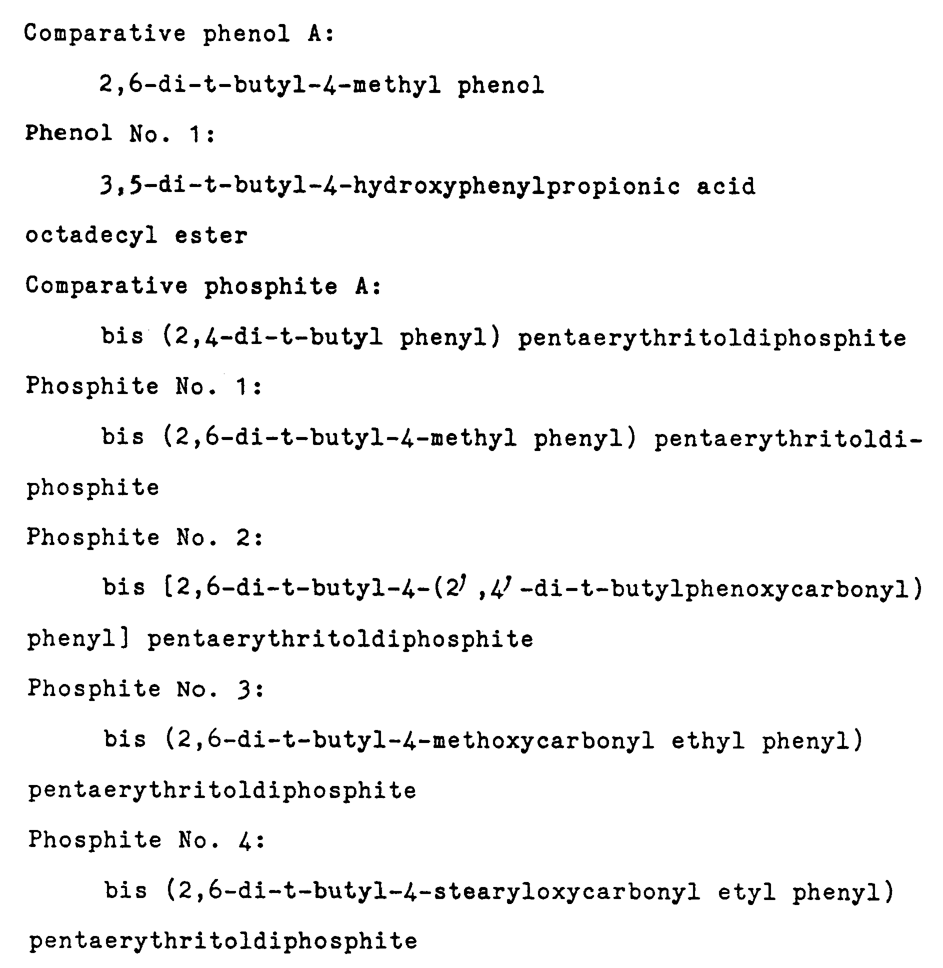

### Example 2

The phenol compound and organic phosphite compound described in Table 2 were added each in an amount of 0.1 part by weight to 100 parts by weight of crude low density ethylene . butene-1 copolymer (Ti: 3, Al: 82, Mg: 4, Si: 76 ppm) followed by thorough mixing. The resulting composition was pelletized using a conventional extruder at the resin temperature of 190°C and injection-moulded at 190°C to prepare test pieces of 1 mm thickness.

Using test pieces, the same tests as in Example 1 were carried out. The degree of yellowness of the test piece after 144 hours heating was measured in the test of the change of hue (heat colouring property).

The results are shown in Table 2.

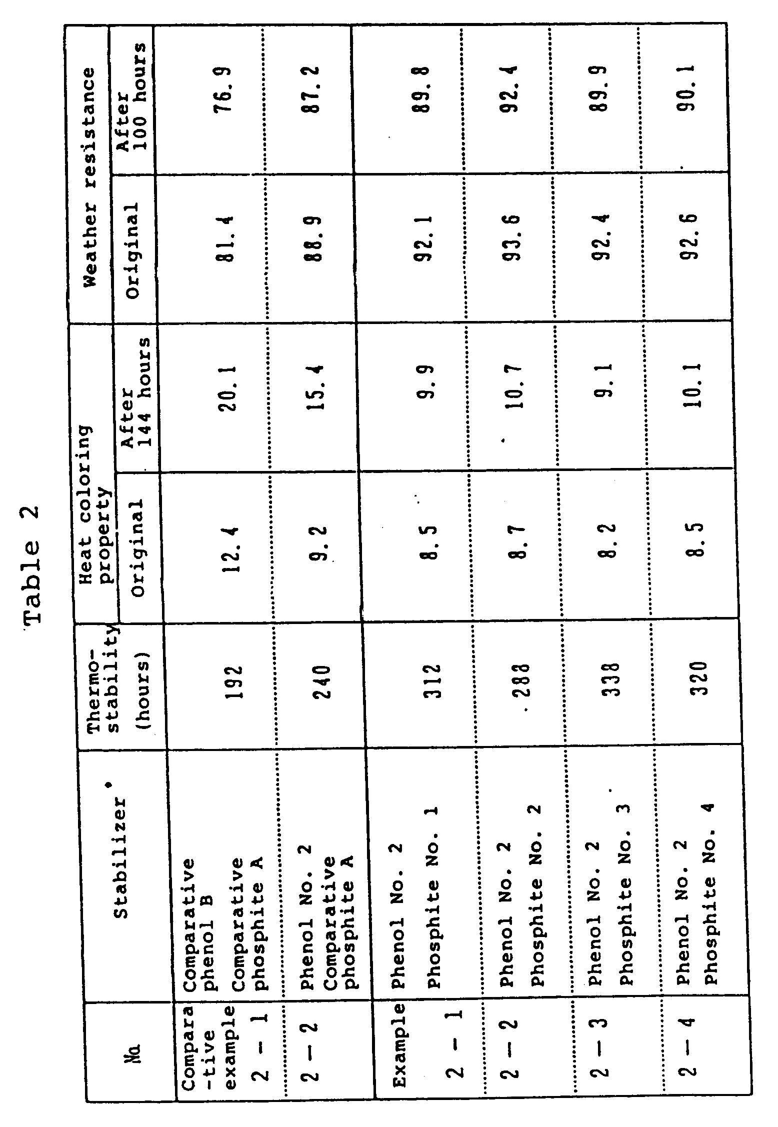

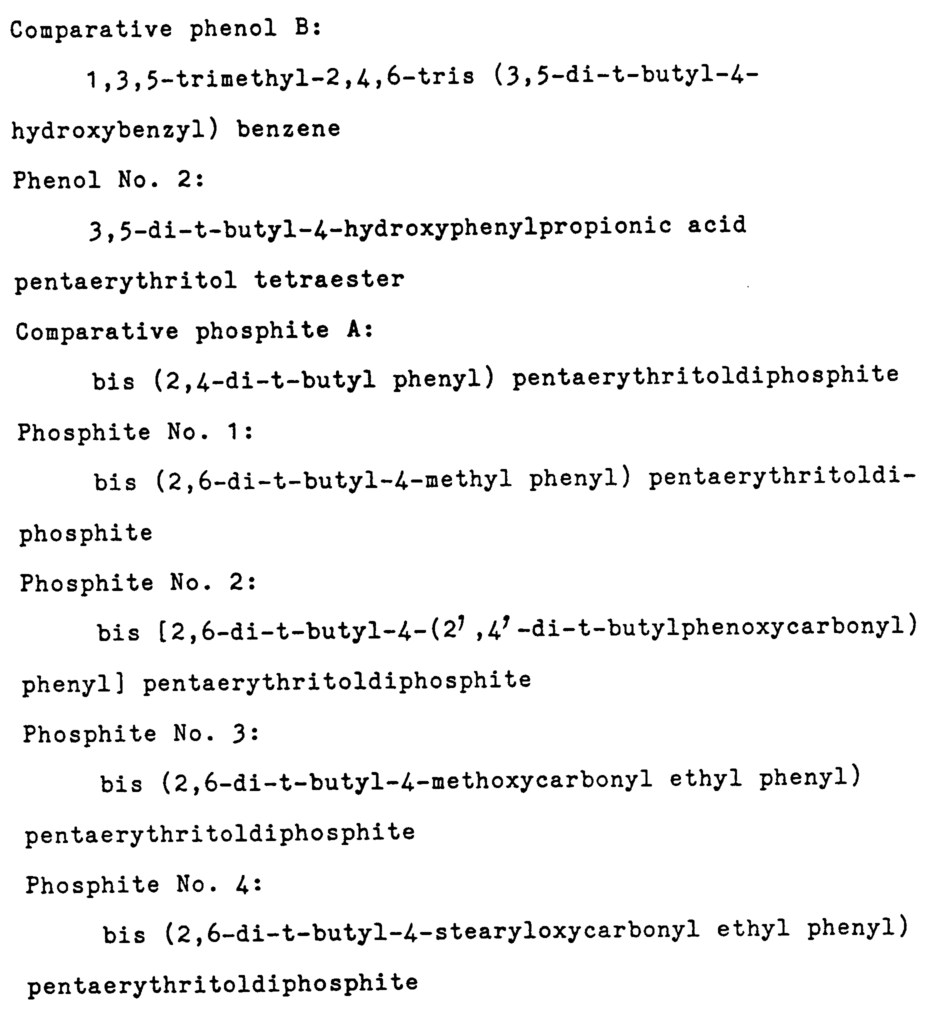

### Example 3

0.2 part by weight of the phenol compound and 0.1 part by weight of the organic phosphite compound described in Table 3 and 0.05 part by weight of calcium stearate were added to 100 parts by weight of crude polypropylene (Ti: 4, Al: 13, Mg: 69 ppm) followed by thorough mixing. The resulting composition was pelletized using a conventional extruder at the resin temperature of 250°C and injection-moulded at 250°C to prepare test pieces of 1 mm thickness.

Using test pieces, the same tests as in Example 1 were carried out. The degree of yellowness of the test piece after 1000-hours heating was measured in the test of the change of hue (heat colouring property).

The results are shown in Table 3.

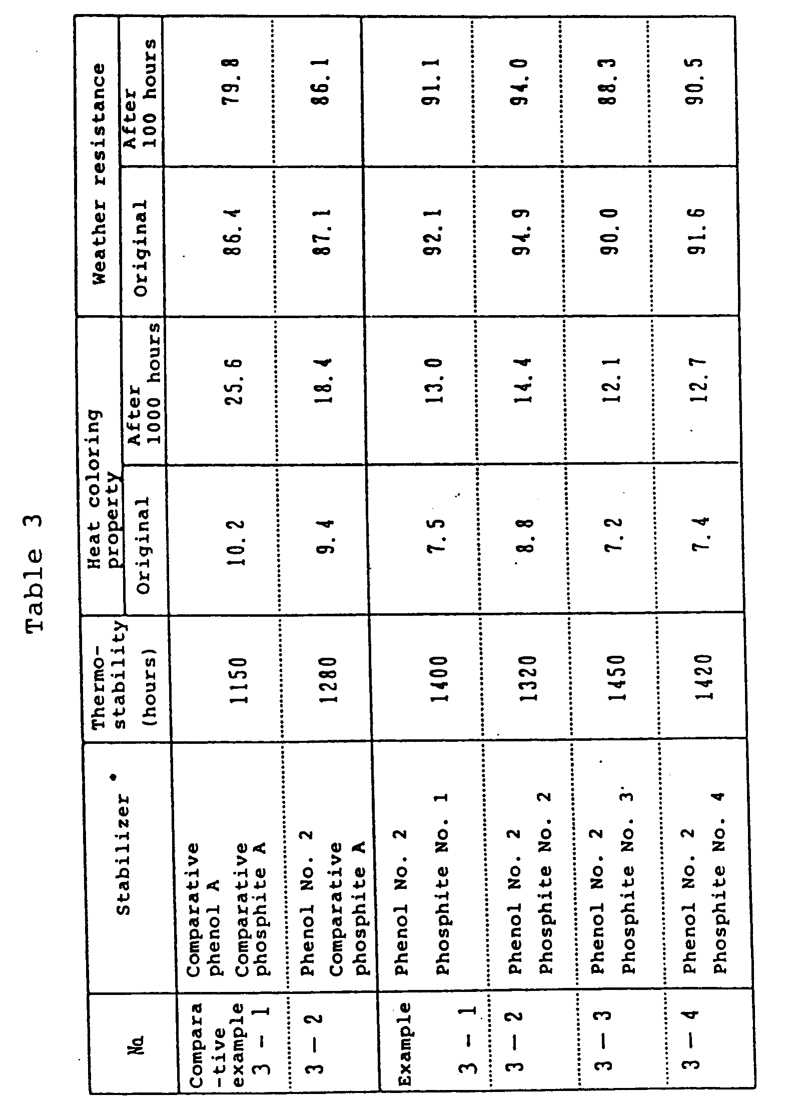

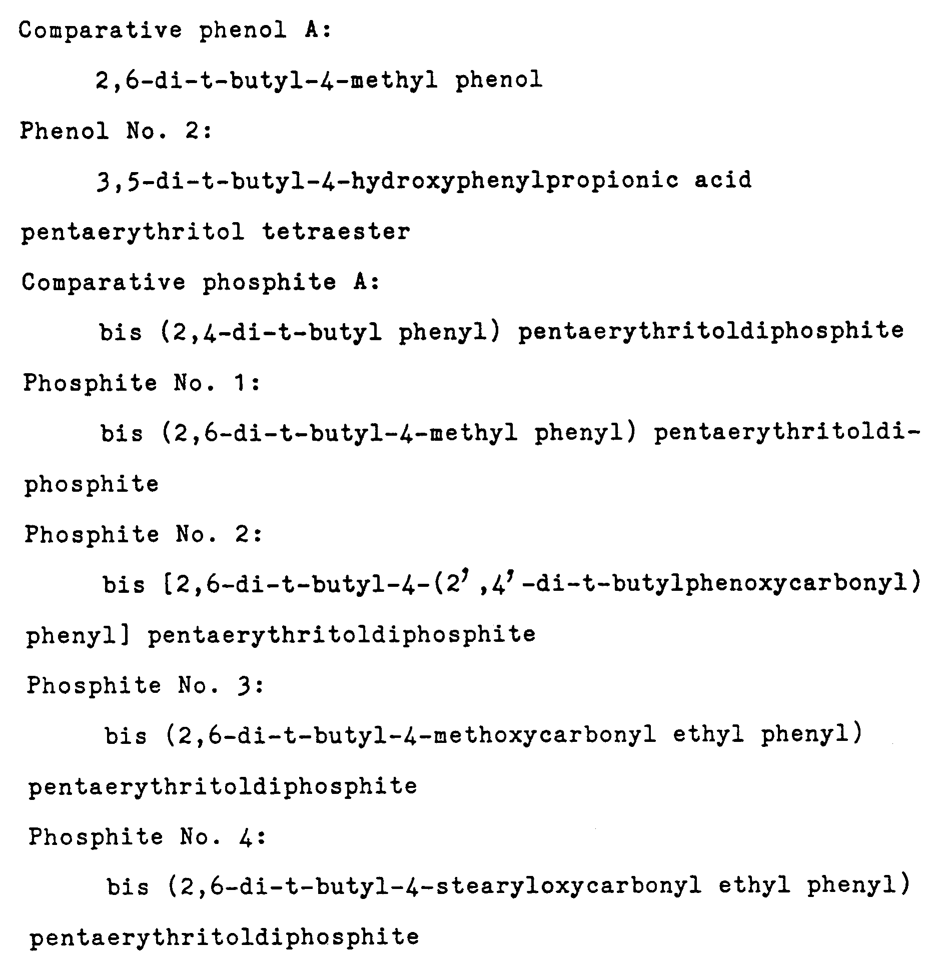

### Example 4

0.2 part by weight of the phenol compound and 0.1 part by weight of the organic phosphite compound described in Table 4 and 0.05 part by weight of calcium stearate were added to 100 parts by weight of crude polypropylene (Ti: 15, Al: 55, Fe: 5, Na: 8 ppm) followed by thorough mixing. Hereafter, the resultant composition was pelletized using a conventional extruder at the resin temperature of 250°C and injection-moulded at 250°C to prepare test pieces of 1 mm thickness.

Using the test pieces, the same tests as in Example 3 were carried out.

The results are shown in Table 4.

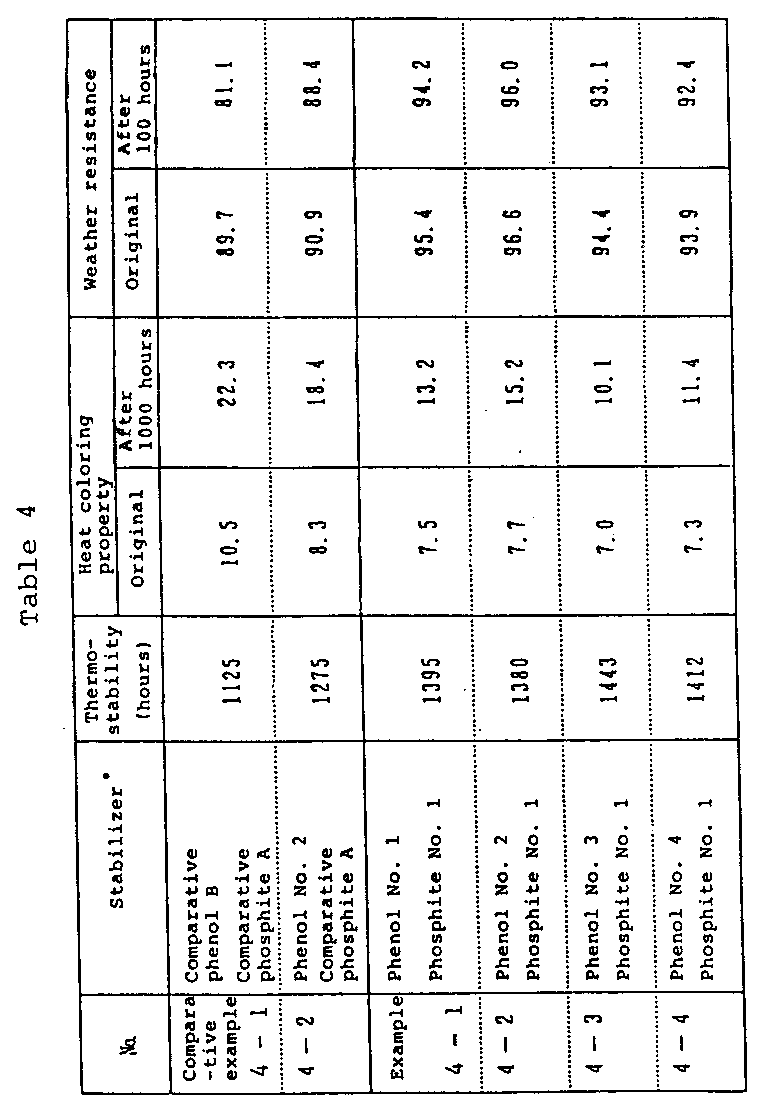

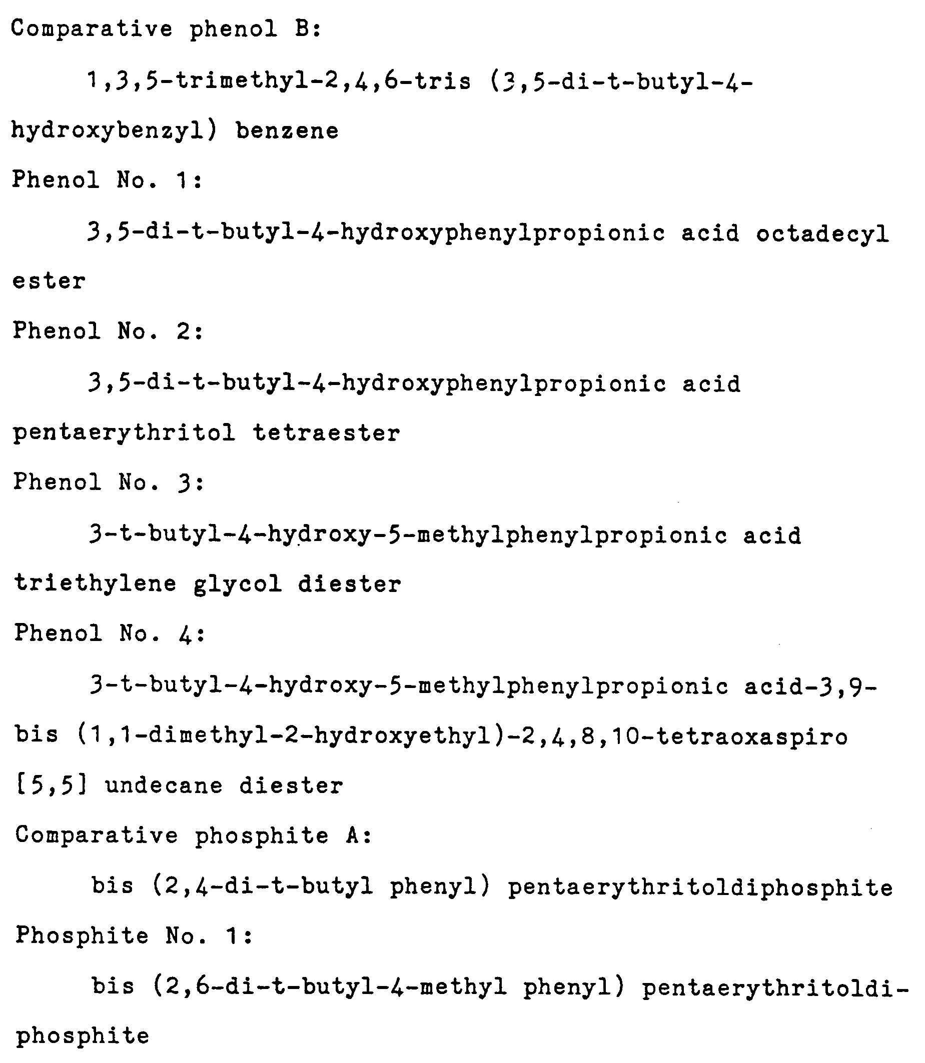

## Claims

1. A polyolefin composition characterised in that it comprises for each 100 parts by weight of a polyolefine which has been produced with use of a Ziegler catalyst and contains at least 30 ppm of metals coming from the Ziegler catalyst used, 0.005 to 1 part by weight of a phenol compound having the formula (I) and 0.005 to 1 part by weight of an organic phosphite compound having the formula (II) 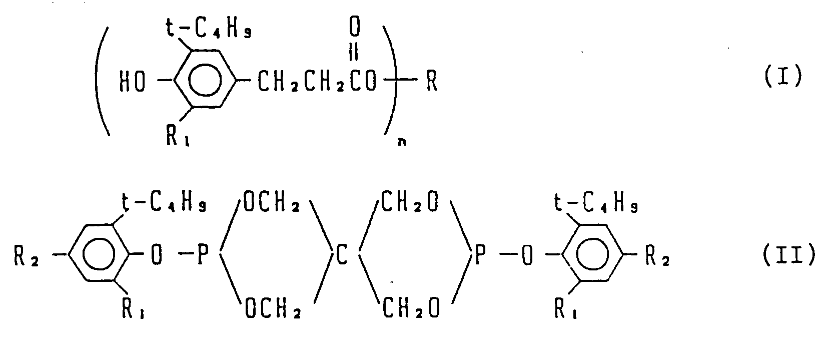 in which formulae R is a residue of a monohydric, dihydric, trihydric or tetrahydric alcohol, R₁ is methyl or tert.-butyl, R₂ is an alkyl, -CH₂CH₂COOR₃ or -COOR₃ group wherein R₃ is an alkyl, an aryl or an alkylaryl group, and n is an integer of from 1 to 4.

2. A composition as claimed in claim 1, characterised in that R is a pentaerythritol residue, R₂ is an alkyl group having 1 to 9 carbon atoms, R₃ is an alkyl group having 1 to 18 carbon atoms, phenyl or 2,4-di-tert.-butylphenyl.

3. A composition as claimed in claim 1, or 2, characterised by further comprising an anti-oxidant containing sulfur and/or a light stabilizer.

## Patentansprüche

1. Polyolefingemisch, dadurch **gekennzeichnet,** daß es auf jeweils 100 Gewichtsteile eines Polyolefins, das unter Verwendung eines Ziegler-Katalysators hergestellt wurde, wenigstens 30 ppm der aus dem Ziegler-Katalysator stammenden Metalle, 0,005 bis 1 Gew.-Teil einer Phenolverbindung der Formel (I) und 0,005 bis 1 Gew.-Teil einer organischen Phosphitverbindung der Formel (II) 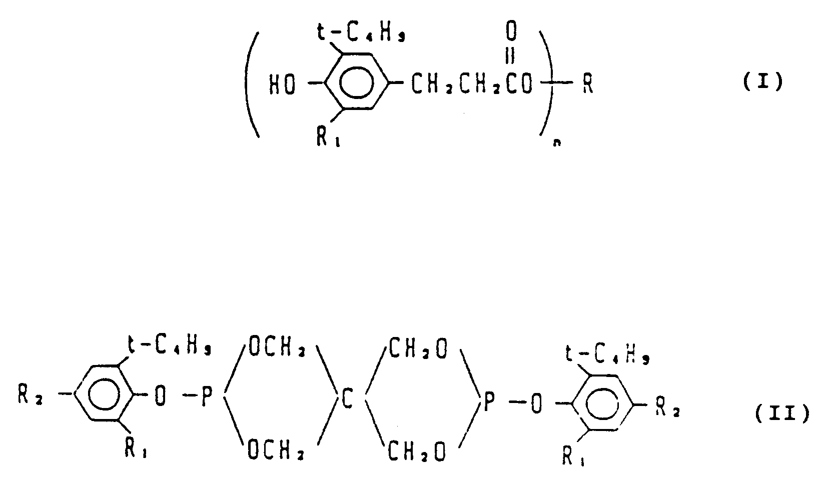 enthält, wobei R den Rest eines ein-, zwei-, drei- oder vierwertigen Alkohols, R₁ Methyl oder tert.-Butyl, R₂ ein Alkyl, eine -CH₂CH₂COOR₃- oder -COOR₃-Gruppe bedeuten, worin R₃ für ein Alkyl, ein Aryl oder ein Alkylaryl steht, und n eine ganze Zahl von 1 bis 4 bedeutet.

2. Gemisch nach Anspruch 1, dadurch **gekennzeichnet,** daß R einen Pentaerythritrest, R₂ eine Alkylgruppe mit 1 bis 9 C-Atomen und R₃ eine Alkylgruppe mit 1 bis 18 C-Atomen, Phenyl oder 2,4-di-tert.-Butylphenyl bedeuten.

3. Gemisch nach Anspruch 1 oder 2, dadurch **gekennzeichnet,** daß es außerdem noch ein Schwefel enthaltendes Antioxydans und/oder einen Lichtstabilisator enthält.

## Revendications

1. Composition de polyoléfine caractérisée en ce qu'elle comprend pour chacune des 100 parties en poids d'une polyoléfine, qui a été produite avec l'utilisation d'un catalyseur de Ziegler et contient au moins 30 ppm de métaux venant du catalyseur de Ziegler utilisé, 0,005 à 1 partie en poids d'un composé phénol de formule (I) et 0,005 à 1 partie en poids d'un composé phosphite organique de formule (II) : 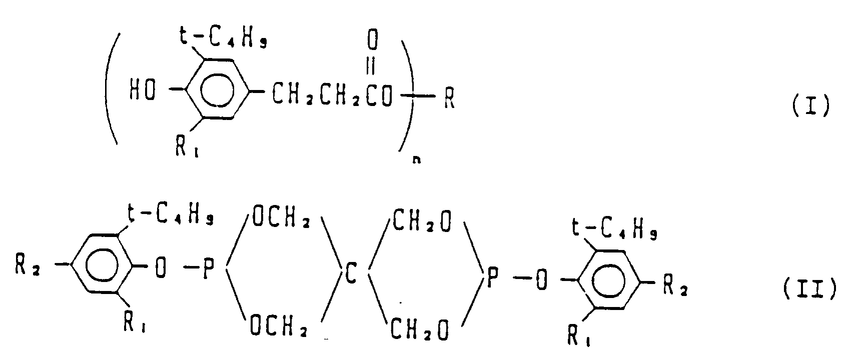 dans lesquelles R est un résidu d'un mono, di, tri ou tétraalcool, R₁ est un méthyle ou ter-butyle, R₂ est un alkyle, un groupe -CH₂CH₂COOR₃ ou -COOR₃ dans lequel R₃ est un alkyle, un aryle ou un groupe alkylaryle et n est un entier allant de 1 à 4.

2. Composition telle que revendiquée dans la revendication 1, caractérisée en ce que R est un résidu pentaérythritol, R₂ est un groupe alkyle ayant 1 à 9 atomes de carbone, R₃ est un groupe alkyle ayant 1 à 18 atomes de carbone, phényle ou 2,4-di-ter-butylphényle.

3. Composition telle que revendiquée dans la revendication 1 ou 2, caractérisée en ce qu'elle comprend en outre un antioxydant contenant du soufre et/ou un léger stabilisateur.
